# EUROPEAN PATENT SPECIFICATION

(11) **EP 4 517 370 B1**
(45) Date of publication and mention of the grant of the patent: **18.03.2026**
(21) Application number: 24180963.1
(22) Date of filing: 10.06.2024
(51) Int. Cl.: G01S 7/41, G01S 13/42, G01S 13/931

(54) **GUARDRAIL DETECTING APPARATUS AND GUARDRAIL DETECTING METHOD**
LEITPLANKENERKENNUNGSVORRICHTUNG UND LEITPLANKENERKENNUNGSVERFAHREN
APPAREIL DE DÉTECTION DE GLISSIÈRE DE SÉCURITÉ ET PROCÉDÉ DE DÉTECTION DE GLISSIÈRE DE SÉCURITÉ

(30) Priority: 01.09.2023 KR 20230116545
(43) Date of publication of application: 05.03.2025
(73) Proprietor: Hyundai Mobis Co., Ltd., Gangnam-gu Seoul 06141 (KR)
(72) Inventor: SEO, Yu Rim, 16891 Yongin-si (KR)
(74) Representative: Vossius & Partner Patentanwälte Rechtsanwälte mbB

(56) References cited:
- EP-A1- 3 905 105
- DE-A1- 102016 212 193
- JP-A- 2018 138 402
- US-B2- 11 312 371

## Description

### CROSS-REFERENCE TO RELATED APPLICATION

### TECHNICAL FIELD

The present disclosure relates to a guardrail detecting apparatus and a guardrail detecting method for predicting and generating a guardrail pattern located on a front side a vehicle.

### BACKGROUND

US 11 312 371 B2 relates to a vehicle control apparatus and a vehicle control method comprising a radar for receiving radar signals transmitted from outside the vehicle and reflected from objects around the vehicle and processing the received radar signals to obtain detection data for the objects, and a controller for determining a stationary object among the objects based on the detection data, extracting feature points, determining whether the stationary object is a guardrail based on the extracted feature points, and determining a false target among the objects based on the guardrail.

JP2018 138402 A relates to a vehicle driving assisting system including: a travelling road information acquisition part for acquiring travelling road information on a travelling road of a vehicle ; a grid region setting part for setting a grid region consisting of a plurality of grid points on the travelling road based on the travelling road information; a travelling route candidate calculation part for calculating a plurality of travelling route candidates by the route search using the plurality of grid points in the grid region; and a target travelling route calculation part for selecting one travelling route candidate as a target travelling route based on a predetermined condition from the plurality of travelling route candidates.

EP 3 905 105 A1 relates to a computer implemented method is provided for determining a collision free space in front of a host vehicle. A plurality of limiting points is detected via a detection system of the host vehicle, wherein each limiting point is located at a respective obstacle free distance with respect to the vehicle.

DE 10 2016 212193 A1 relates to a device and method for detecting an object on a road can improve the performance of a vehicle's driving environment recognition system by detecting the size and position of an object on a road with high accuracy based on radar and lidar data obtained using a radar sensor and a lidar sensor installed in the vehicle, respectively.

A radar device is a device that radiates electromagnetic wave signals through a transmitting antenna and receives the signals reflected from a target from a receiving antenna, and then generates detection information, such as a distance, a speed, and an angle of the target by using the received signals.

The radar technology is utilized to detect a target in a driving assisting system of a vehicle, warn an accident risk for detected target in advance, and actively prevent and avoid an accident.

This radar technology for vehicles is not only used to detect surrounding vehicles, but also to detect stationary structures, such as guardrails.

Here, to recognize a guardrail pattern by using the radar technology for vehicles, stationary structures, such as steel guardrails, safety bars, concrete walls, and tunnel walls are constructed by guardrails using stationary object detections that are determined by corner radar devices. Then, a guardrail pattern is generated in a broadside (90 degrees in a travel direction of a vehicle) area of the corner radar device by using stationary object detections near a B-pillar of the vehicle, and the coordinates of the guardrail leading to a rear side of the vehicle are predicted and generated by using a movement locus of the vehicle.

In this way, it is possible to predict a guardrail pattern in a rear area of the vehicle by using a trajectory of the movement of the vehicle over time. However, because a front area of the vehicle corresponds to a location, at which the vehicle has not yet moved, the movement trajectory of the vehicle cannot be used to generate a guardrail pattern, and the guardrail pattern has to be generated by predicting, among the detection signals received from the front side.

However, when a guardrail pattern is predicted by using detection signals received from the front side, a wrong detection signal may be recognized due to reflected signals or inaccurate angles that occur around the guardrail. Furthermore, a target unrelated to the driving of the vehicle may be recognized due to a signal reflected from a target in an opposite lane. As a result, a prediction accuracy of the guardrail pattern may decrease, and a wrong warning may occur as a false target is recognized.

### SUMMARY

The present disclosure has been made to solve the above-mentioned problems occurring in the prior art while advantages achieved by the prior art are maintained intact.

In a first aspect, the present invention provides a guardrail detecting apparatus according to claim 1. In a second aspect, the present invention provides a guardrail detecting method according to claim 8.

### BRIEF DESCRIPTION OF THE DRAWINGS

The above and other objects, features and advantages of the present disclosure will be more apparent from the following detailed description taken in conjunction with the accompanying drawings:
FIG. 1 is a view illustrating a configuration of a guardrail detecting apparatus according to an embodiment of the present disclosure;
FIGS. 2A and 2B are views illustrating a guardrail detection area according to an embodiment of the present disclosure;
FIGS. 3A and 3B are exemplary views illustrating an operation of selecting guardrail detection signals according to an embodiment of the present disclosure;
FIGS. 4A, 4B, 4C, and 5 are exemplary views illustrating an operation of generating a guardrail pattern according to an embodiment of the present disclosure;
FIGS. 6A, 6B, 7A, and 7B are exemplary views illustrating an operation of verifying a guardrail detection performance according to an embodiment of the present disclosure; and
FIGS. 8 and 9 are views illustrating an operational flow of a guardrail detection method according to an embodiment of the present disclosure.

### DETAILED DESCRIPTION

Hereinafter, embodiments of the present disclosure will be described in detail with reference to the accompanying drawings. In adding reference numerals to the components of the drawings, it is noted that the same components are denoted by the same reference numerals even when they are drawn in different drawings. Furthermore, in describing the embodiments of the present disclosure, when it is determined that a detailed description of related known configurations and functions may hinder understanding of the embodiments of the present disclosure, a detailed description thereof will be omitted.

Furthermore, in describing the components of the embodiments of the present disclosure, terms, such as first, second, "A", "B", (a), and (b) may be used. The terms are simply for distinguishing the components, and the essence, the sequence, and the order of the corresponding components are not limited by the terms. Unless defined differently, all the terms including technical or scientific terms have the same meanings as those generally understood by an ordinary person in the art, to which the present disclosure pertains. The terms, such as the terms defined in dictionaries, which are generally used, should be construed to coincide with the context meanings of the related technologies, and are not construed as ideal or excessively formal meanings unless explicitly defined in the present disclosure.

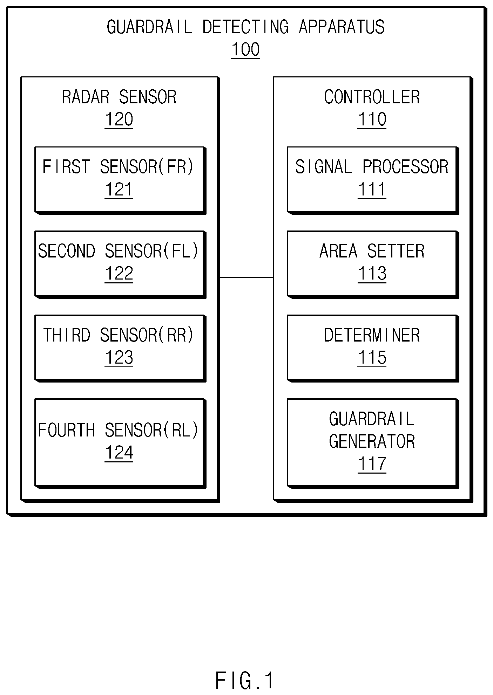

FIG. 1 is a view illustrating a configuration of a guardrail detecting apparatus according to an embodiment of the present disclosure.

Referring to FIG. 1, a guardrail detecting apparatus 100 according to an embodiment of the present disclosure may include a controller 110 and a radar sensor 120.

The radar sensor 120 may include a first sensor 121, a second sensor 122, a third sensor 123, and a fourth sensor 124.

The first sensor 121, the second sensor 122, the third sensor 123, and the fourth sensor 124 are installed at different locations of a vehicle, and the respective sensors may radiate radar signals in different directions of an outside of the vehicle to detect a target (for example, a guardrail) that is located around the vehicle.

As an example, the first sensor 121 is installed on a front right side FR of the vehicle, and may detect a target that is located in a sensor detection area on a front right side of the vehicle. The second sensor 122 is installed on a front left side FL of the vehicle, and may detect a target that is located in the sensor detection area on the front left side of the vehicle. The third sensor 123 is installed on a rear right side RR of the vehicle, and may detect a target that is located in the sensor detection area on the rear right side of the vehicle. The fourth sensor 124 is installed on a rear left side RL of the vehicle, and may detect a target located in the sensor detection area in the rear left side direction of the vehicle. Here, some areas of the sensor detection areas may overlap other detection areas.

The controller 110 recognizes a coordinate of a target, that is, a guardrail based on detection results from the first to fourth sensors 121 to 124, and generates a guardrail pattern based on the recognized coordinate of the guardrail.

Then, the controller 110 sets a guardrail detection area for a guardrail detection on the front side of the vehicle, and selects a valid detection signal from detection signals that are received from the first to fourth sensors 121 to 124 in the set guardrail detection area such that a guardrail pattern is generated and recognized whereby a detection accuracy of an actual guardrail is improved.

Here, the controller 110 may be implemented in a form of an independent hardware device including a memory and at least one processor that processes respective operations, and may be driven in a form that is included in another hardware device, such as a microprocessor or a general-purpose computer system. At least one processor may be implemented as an application specific integrated circuit (ASIC), a central processing unit (CPU), a microcontroller, and/or a microprocessor.

Referring to FIG. 1, the controller 110 may include a signal processor 111, an area setter 113, a determiner 115, and a guardrail generator 117.

The signal processor 111 processes radar signals that are received from the first to fourth sensors 121 to 124 to identify at least one detection information.

As an example, the signal processor 111 may acquire information, such as a detection location and a velocity of the target based on the radar signals.

The area setter 113 sets a guardrail detection area for detecting a guardrail on the front side of the vehicle. Here, the guardrail detection area is set to a specific area in a travel direction of the vehicle, that is, on the front side, and may include N areas that are formed at a specific interval in the travel direction of the vehicle with respect to a guardrail pattern that is generated in a side area of the radar sensor 120.

The side area of the radar sensor 120 refers to a broadside area on a side of 90 degrees with respect to the travel direction of the vehicle.

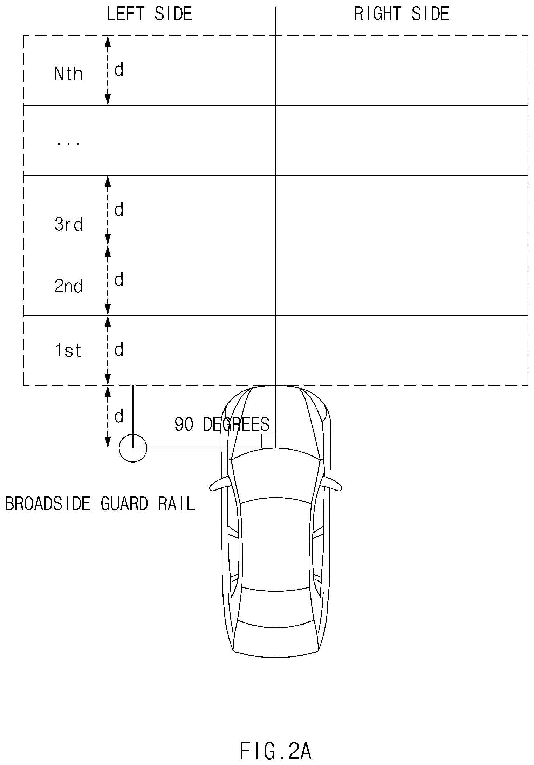

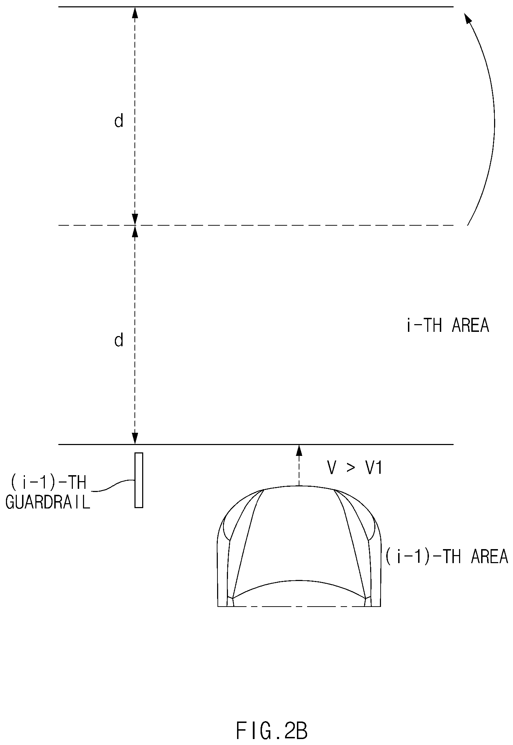

Accordingly, FIGS. 2A and 2B will be referenced for an embodiment of the guardrail detection area.

FIGS. 2A and 2B are views illustrating a guardrail detection area according to an embodiment of the present disclosure.

Referring to FIG. 2A, when a guardrail pattern generated previously in the side area of the radar sensor 120 is present, the area setter 113 sets a first area having a width of a specific distance "d" in the travel direction of the vehicle at a location that is distant by the specific distance "d" in the travel direction of the vehicle with respect to the guardrail pattern generated in the side area of the radar sensor 120, sets a second area having a width of the specific distance "d" in the travel direction with respect to the first area, and in turn, sets a third area having a width of the specific distance "d" in the travel direction of the vehicle with respect to the second area. In this way, the area setter 113 may set N guardrail detection areas having a width of the specific distance "d" in the travel direction of the vehicle. As an example, the N guardrail detection areas may be set at an interval (width) of 5 m in the travel direction of the vehicle.

The N areas may have a length of a specific distance "l" in the transverse direction with respect to a center line in a longitudinal direction that extends in the travel direction of the vehicle. Here, the longitudinal direction refers to a direction that is parallel to the travel direction of the vehicle, and a transverse direction refers to a direction that is perpendicular to the travel direction of the vehicle.

Then, N guardrail detection areas may be set on the left side with respect to the center line in the longitudinal direction of the vehicle, which extends in the travel direction of the vehicle, and N guardrail detection areas that are symmetrical to the left side may be set on the right side.

However, the area setter 113 may set the guardrail detection area on the front side of the vehicle only when there is a guardrail pattern generated in the side area of the vehicle. Here, the guardrail pattern may be generated by the guardrail generator 117.

As illustrated in FIG. 2A, the area setter 113 basically sets the interval (width) of the guardrail detection areas to be constant, but as illustrated in FIG. 2B, the interval (width) of some guardrail detection areas also may be adjusted depending on a state of the vehicle.

That is, the area setter 113 may adjust the interval (width) of the front guardrail detection areas depending on the velocity "V" of the vehicle. For example, the area setter 113 identifies the velocity "V", and when the identified velocity "V" is more than a reference velocity V1, the interval (width) of the guardrail detection area located first on the front side may be adjusted to two times of an existing interval (width), that is, 2d.

When it is assumed that the location of the vehicle is located in the (i-1)-th area of a preset guardrail detection area, and when the velocity "V" is more than the reference velocity V1, the interval (width) of the i-th area that is first located on front side may be adjusted to 2d.

The determiner 115 may determine whether to perform an operation of generating a guardrail pattern in the previously set guardrail detection area.

As an example, when a guardrail pattern is present in the side area of the vehicle, the determiner 115 determines that an operation of generating a guardrail pattern for the first area on the front side has to be performed, and when a guardrail pattern is not present in the side area of the vehicle, the determiner 115 determines that the operation of generating a guardrail pattern for the first area on the front side does not have to be performed.

Furthermore, the determiner 115 may determine that an operation of generating a guardrail pattern for the next i-th area has to be performed if a guardrail pattern generated in the (i-1)-th area is present when the vehicle enters the guardrail detection area and is located in the (i-1)-th area. Meanwhile, the determiner 115 may determine that an operation of generating a guardrail pattern for the i-th area does not have to be performed thereafter when no guardrail pattern generated in the (i-1)-th area is present.

Here, the determiner 115 may determine whether a guardrail pattern is present in the i-th area before performing an operation of generating a guardrail pattern for the i-th area.

When it is identified that a guardrail pattern is present in the i-th area, the determiner 115 may determine that an operation of generating a guardrail pattern for the i-th area has to be performed.

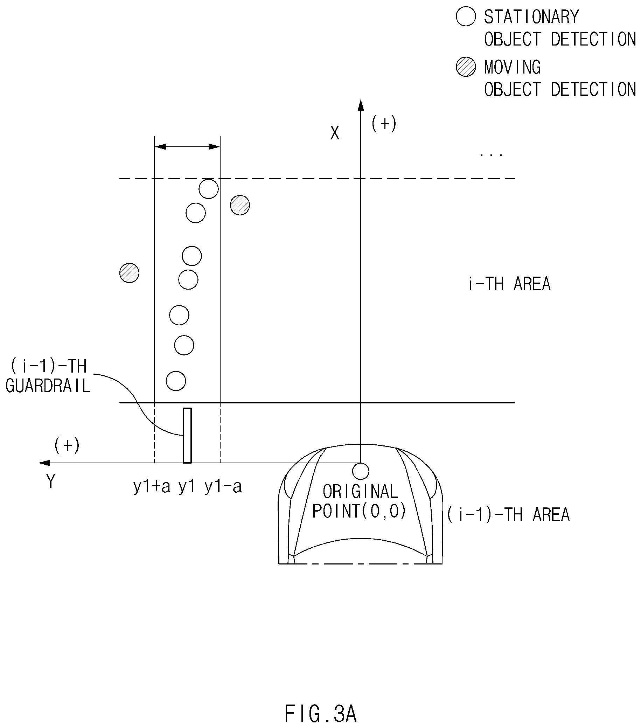

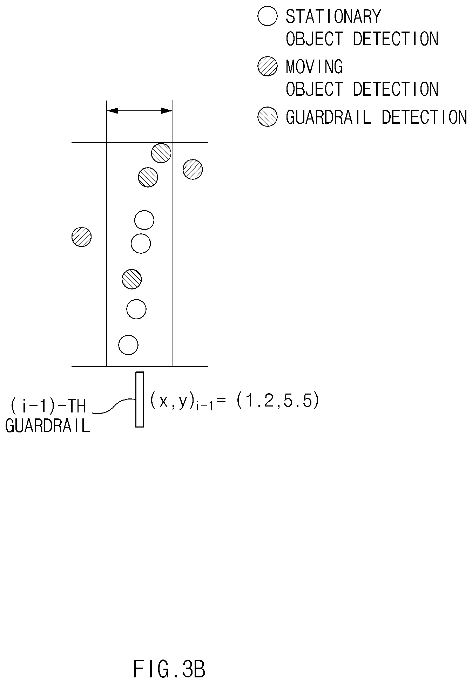

FIGS. 3A and 3B are exemplary views illustrating an operation of determining a guardrail detection in a guardrail detection area according to an embodiment of the present disclosure. For convenience of description, the embodiments according to FIGS. 3A and 3B will be described based on an area that is set on a left side of a longitudinal direction center line of the vehicle that extends in the travel direction of the vehicle, but it is apparent that the same is applied to an area that is set on the symmetrical right side.

The determiner 115 may determine a guardrail detection candidate with reference to the embodiment illustrated in FIG. 3A.

Referring to FIG. 3A, a transverse direction condition for determining a guardrail detection candidate means a condition included in the transverse direction detection area from y1-a to y1+a with respect to a transverse direction (the y-axis) location coordinate y1 of a guardrail generated in the (i-1)-th area. Here, "a" is an arbitrary distance constant, and may vary depending on a yaw rate value of the vehicle.

For example, when the yaw rate of the vehicle is less than 5 degrees, the determiner 115 may recognize a straight line situation, and may set "a" to 1 m. In this case, assuming that the coordinate of the guardrail pattern generated in the (i-1)-th area are (xi-1, yi-1)={1.2, 5.5}, it may be determined that a transverse direction condition is satisfied when the "y" coordinate value in the detections from the radar sensor 120 corresponds to a range of 4.5 to 6.5,

Meanwhile, when the yaw rate of the vehicle is 5 degrees or more, the determiner 115 may recognize it as a curve situation, and may set "a" to 2m. In this case, assuming that the coordinate of the guardrail generated in the (i-1)-th area are (xi-1, yi-1)={1.2, 5.5}, it may be determined that the transverse direction condition is satisfied when the "y" coordinate value in the detections from the radar sensor 120 corresponds to a range of 3.5 to 7.5.

Accordingly, the determiner 115 determines, among the detection signals in the i-th area, the detection signals that satisfy the transverse direction condition, and determines the number of moving object detection signals and stationary object detection signals among them. In the embodiment of FIG. 3A, there are seven stationary object detection signals and 0 moving object detection signals that satisfy the transverse direction condition in the i-th area.

Here, the determiner 115 selects stationary object detection signals that satisfies the transverse direction condition in the i-th guardrail detection area as a guardrail candidate detection.

Thereafter, the determiner 115 compares a "y" coordinate of a guardrail candidate detection that is predicted based on a linear guardrail function used when the guardrail pattern in the (i-1)-th area is generated with an actual "y" coordinate of a guardrail candidate detection in the i-th area to select similar guardrail candidate detections as a guardrail detection.

Here, the determiner 115 may predict the "y" coordinate by substituting the "x" coordinate of the guardrail candidate detection into the linear guardrail function that is used when the guardrail pattern in the (i-1)-th area is generated.

The linear guardrail function has a form f(x)=ax+b, and an inclination of the "a" value and a "y" intercept of the "b" value may be obtained by performing linear regression based on a guardrail detection.

As an example, when the linear guardrail function used when the guardrail pattern of the (i-1)-th area is generated is f(x)ᵢ₋₁=-0.1x+5, the "x" values of the guardrail candidate detections are substituted into the x value of f(x)ᵢ₋₁. When a coordinate of any one of the seven guardrail candidate detections is (5.5, 4), the determiner 115 may substitute 5.5 into the "x" value to predict the "y" coordinate from f(x)ᵢ₋₁=4.45.

Then, assuming that a prediction error range for the "y" coordinate is 0.5, the actual "y" coordinate of the corresponding guardrail candidate detection is 4, and thus, the predicted "y" coordinate corresponds to an error range. Here, the prediction error range for the "y" coordinate may be changed as much as desired depending on the embodiment.

Accordingly, the determiner 115 may select the guardrail candidate detection as a guardrail detection because the predicted "y" coordinate for the corresponding guardrail candidate detection and the actual "y" coordinate are similar in the error range.

Of course, when the difference between the predicted "y" coordinate for the guardrail candidate detection and the actual "y" coordinate deviates from the error range, the determiner 115 may determine the corresponding guardrail candidate detection as being invalid and exclude it.

The determiner 115 may determine whether a guardrail pattern is present in the corresponding area based on the number of guardrail detections and the number of moving object detections in the transverse direction detection area of the i-th area. As an example, the determiner 115 may determine that a guardrail pattern is present in the corresponding area when the number of moving object detections in the transverse direction detection area of the i-th area is 0 and there are a specific number of guardrail detections, for example, 2 or more.

As illustrated in FIG. 3B, the determiner 115 may determine that a guardrail pattern is present in the i-th area when the number of moving object detections in the transverse direction detection area of the i-th area is 0 and the number of guardrail detections is 3.

When the determiner 115 identifies that a guardrail pattern is present in the i-th area, the controller generates the guardrail pattern in the i-th area through the guardrail generator 117.

The guardrail generator 117 may generate a guardrail pattern on the rear side by using a movement locus, along which the vehicle has passed, and may generate a guardrail pattern on the side area formed in a direction that is perpendicular to the travel direction of the vehicle by using a stationary object detection near a central pillar (B-pillar) of the vehicle.

Furthermore, when the determiner 115 identifies that a guardrail pattern is present in the guardrail detection area on the front side, the guardrail generator 117 generates a guardrail pattern in the guardrail detection area on the front side.

The guardrail generator 117 may calculate a linear guardrail function by performing a linear regression on not less than a specific number of guardrail detections that area selected by the determiner 115, and may predict a coordinate of the guardrail for the i-th area based on the calculated linear guardrail function to generate a guardrail pattern.

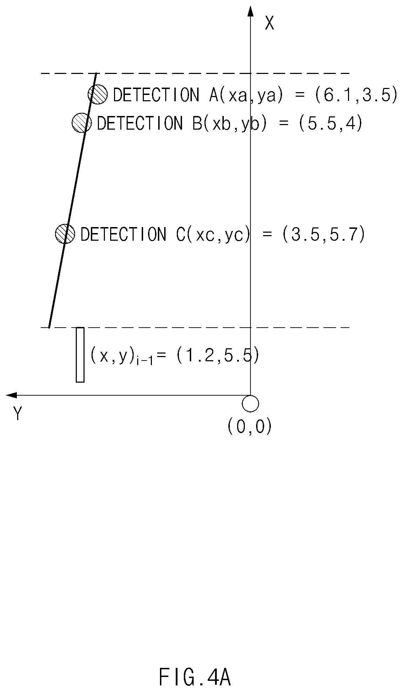

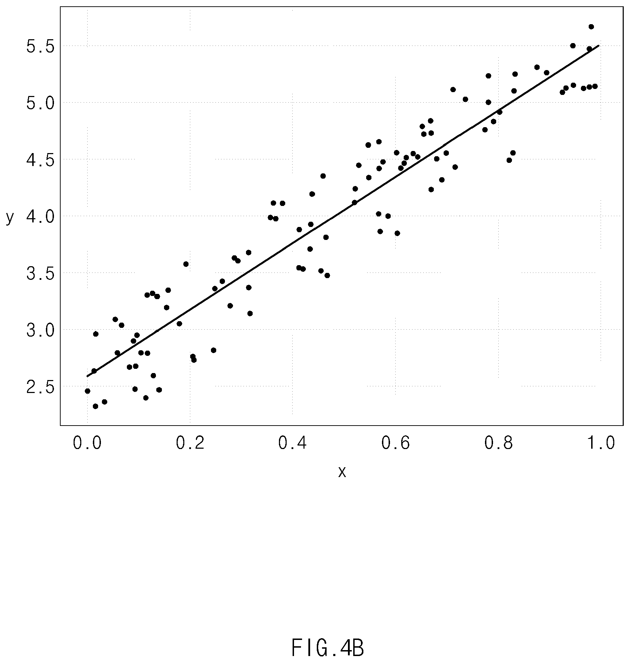

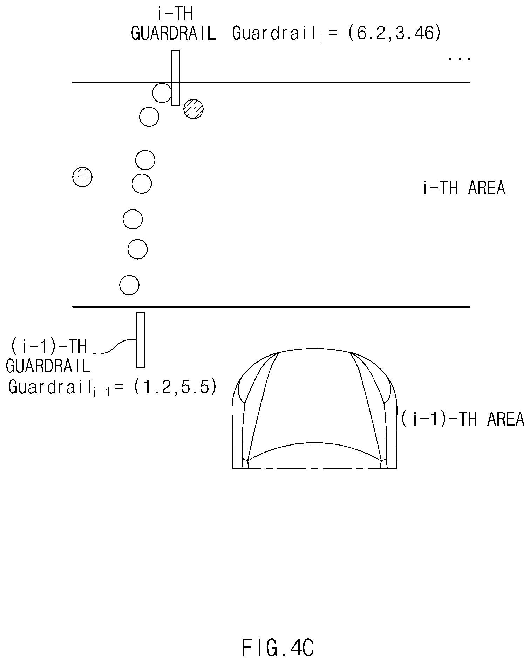

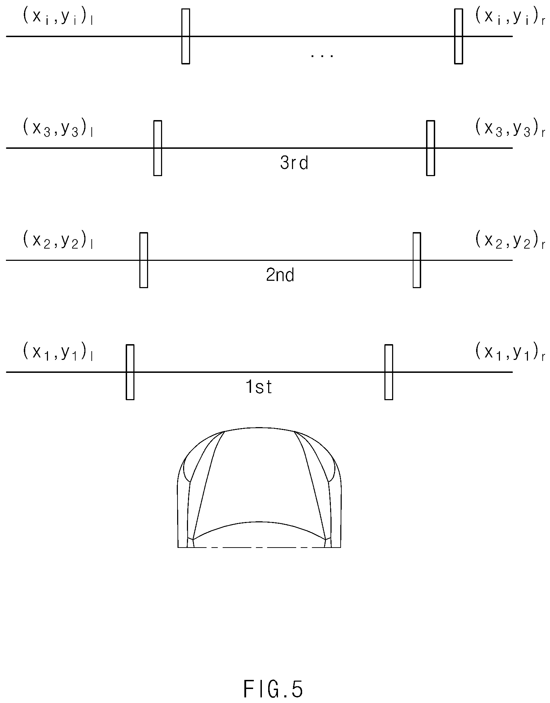

FIGS. 4A, 4B, 4C, and 5 are exemplary views illustrating an operation of generating a guardrail pattern according to an embodiment of the present disclosure.

As illustrated in FIG. 4A, when the coordinates of three guardrail detections in the i-th area are "A"(6.1, 3.5), "B"(5.5, 4), and "C"(3.5, 5.7), the guardrail generator 117 may calculate a linear guardrail function by using the coordinates of guardrail detections "A", "B", and "C".

Then, as illustrated in FIG. 4B, the guardrail generator 117 may perform a linear regression by using guardrail detections "A"(6.1, 3.5), "B"(5.5, 4), and "C"(3.5, 5.7) to calculate a linear guardrail function f(x)i=-0.84x+8.67.

Here, a linear regression is a regression analysis technique that models a linear correlation between a dependent variable "y" and one or more independent variables "x", and an inclination and a y-intercept of the linear guardrail function may be obtained by using "x" and "y". Because the linear regression is a commonly used regression analysis technique, a detailed description thereof will be omitted.

Accordingly, the guardrail generator 117 predicts the coordinate of the i-th guardrail by using the linear guardrail function f(x)ᵢ=-0.84x+8.67 that is calculated for the i-th area. Here, the guardrail generator 117 may predict the coordinate of the i-th guardrail based on the guardrail coordinate of the (i-1)-th area.

For example, a distance between the (i-1)-th guardrail pattern and the i-th guardrail pattern differs by the interval (width) of the i-th area. Accordingly, assuming that the interval (width) of the i-th area is 5 m, the guardrail generator 117 may predict the "x" coordinate of the (i-1)-th area added by 5 as the "x" coordinate of the i-th guardrail.

Here, because the "x" coordinate of the (i-1)-th guardrail pattern is 1.2, the "x" coordinate of the i-th guardrail pattern may be 6.2 (=1.2+5).

Furthermore, the guardrail generator 117 may predict the "y" coordinate of the i-th guardrail pattern based on the linear guardrail function f(x)ᵢ. Here, the guardrail generator 117 may predict the "y" coordinate of the i-th guardrail pattern from f(x)ᵢ=3.46 by substituting the "x" coordinate of 6.2 of the i-th guardrail pattern into the x value of the linear guardrail function f(x)ᵢ=-0.84x+8.67 of the i-th area.

The guardrail generator 117 may generate the i-th guardrail pattern based on the predicted coordinates (xᵢ, yᵢ) = (6.2, 3.46).

In the same manner as above, the guardrail generator 117 may generate a continuous guardrail pattern for the N-th area from the first area of the guardrail detection area. Then, the guardrail pattern may be generated to correspond to the left and right areas with respect to a center location of the vehicle. Accordingly, the embodiment of FIG. 5 will be referenced for the guardrail pattern generated for the first to N-th area.

When the guardrail detection area is set, the guardrail generator 117 sequentially performs operations for generating a guardrail pattern, starting from the nearest area with respect to the location of the vehicle. Then, when it is identified that no guardrail pattern is generated in any one of the first to N-th areas, the guardrail generator 117 determines that it is impossible to generate a guardrail pattern anymore because a continuity of the guardrail is not established, and thus ends an operation of generating a guardrail pattern in the next sequence.

Although not illustrated in FIG. 1, the guardrail detecting apparatus 100 according to an embodiment of the present disclosure may further include a communication part and storage.

The communication part may include a communication module for a vehicle network communication with electrical equipment and/or controllers provided in the vehicle. Here, the vehicle network communication technology may include a controller area network (CAN) communication, a local Interconnect network (LIN) communication, and Flex-Ray communication.

Furthermore, the communication part may include a communication module for wireless Internet access or a communication module for short range communication. Here, the wireless Internet technology may include Wireless LAN (WLAN), Wireless Broadband (Wibro), Wi-Fi, and World Interoperability for Microwave Access (Wimax). Furthermore, the short-range communication technology may include Bluetooth, ZigBee, Ultra-Wideband (UWB), Radio Frequency Identification (RFID), and Infrared Data Association (IrDA).

The storage may store data, commands, and/or algorithms that are necessary for operating the guardrail detecting apparatus 100. Here, the storage may include a storage medium, such as a random access memory (RAM), a static random access memory (SRAM), a read only memory (ROM), a programmable read only memory (PROM), and an electrically erasable programmable read only memory (EEPROM).

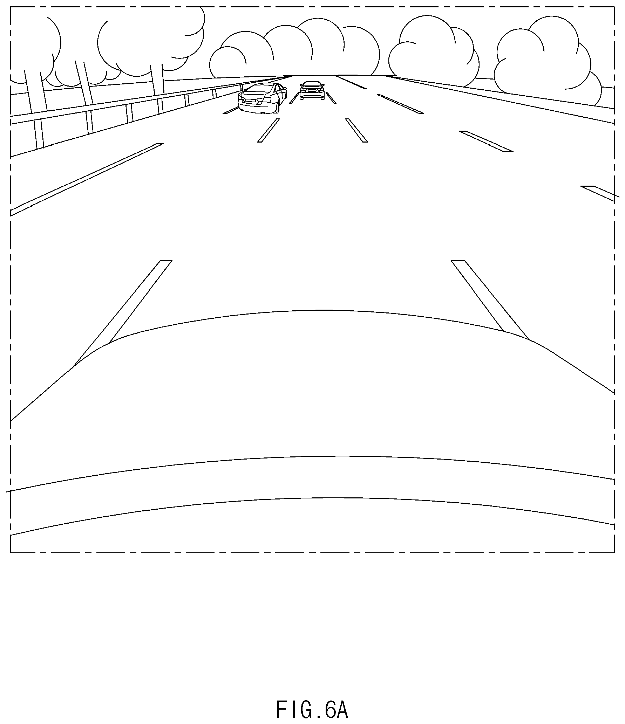

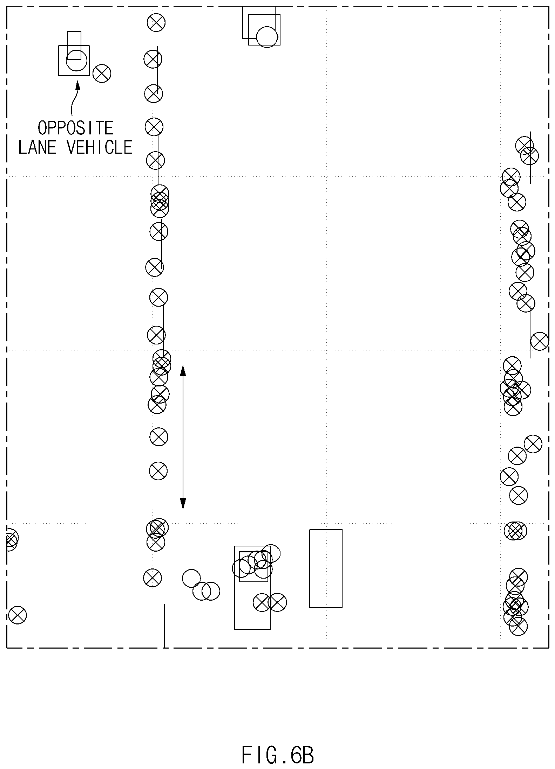

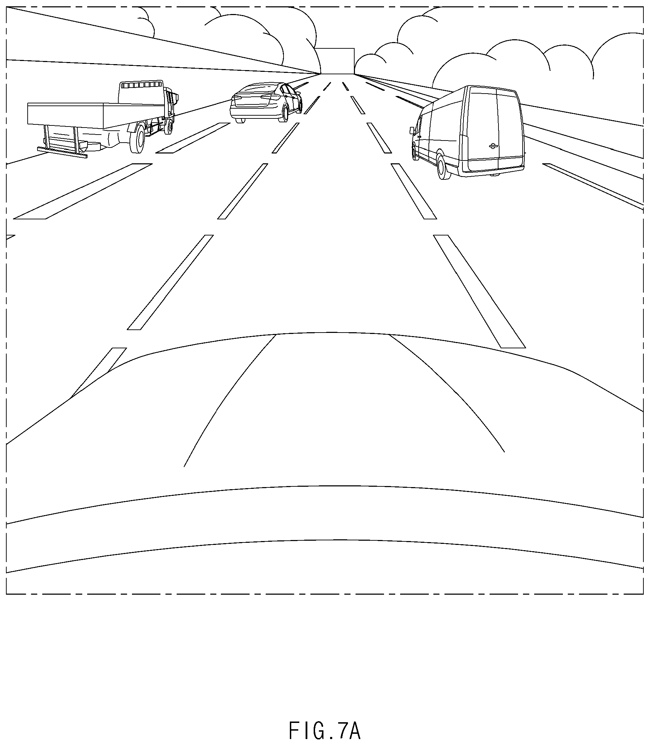

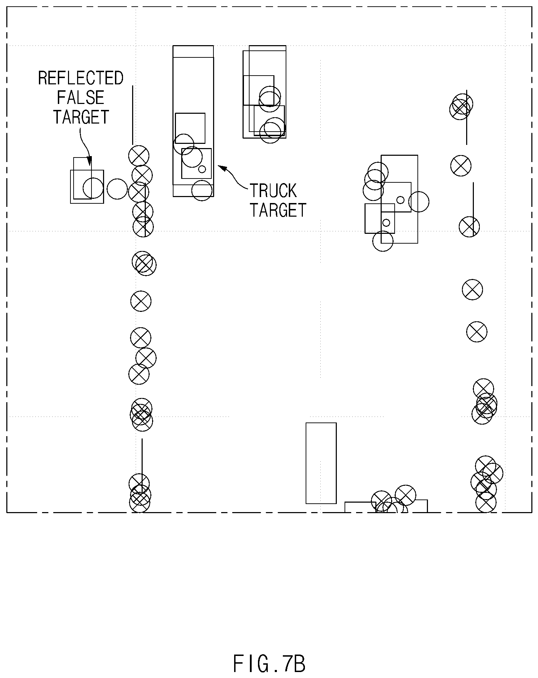

FIGS. 6A, 6B, 7A, and 7B are exemplary views illustrating an operation of verifying a guardrail detection performance according to an embodiment of the present disclosure.

FIGS. 6A and 7A illustrate actual target detection images using a radar sensor, and FIGS. 6B and 7B illustrate target detection results and guardrail pattern generation information according to the present disclosure.

In relation to the actual target detection image illustrated in FIG. 6A, it may be identified in FIG. 6B that a guardrail pattern is generated by using a guardrail detection selected in, among the guardrail detection areas, the transverse direction detection area. Then, it may be identified that a vehicle (target) in an opposite lane of the front left side has been detected, but in this case, due to the generation of the guardrail pattern, the target in the opposite lane outside the guardrail may be deleted from the tracking target.

Furthermore, in FIG. 6B, because the velocity is high, it may be identified that the interval (width) of the guardrail detection areas in the first area has been adjusted to double.

Meanwhile, in relation to the actual target detection image illustrated in FIG. 7A, it may be identified in FIG. 7B that a signal for the truck target on the front left side is reflected on the guardrail and a false target is generated in the opposite lane over the guardrail.

In this case, similarly, it may be identified that a guardrail pattern was generated by using a guardrail detection in, among the guardrail detection areas, the transverse direction detection area, and the false target formed outside the guardrail may be deleted from the tracking target based on the guardrail pattern.

In this way, when an accurate guardrail pattern is generated by recognizing the guardrail pattern on the front side and when it is identified that the initial track is a false target for the false target or the opposite lane, the target information may be deleted whereby a wrong warning due to the false target may be prevented in advance, and accordingly, not only may the tracking accuracy of the actual target be improved, but also the reliability of the driving assisting system also may be improved.

An operation flow of the guardrail detecting apparatus according to the present disclosure configured as above will be described in more detail as follows.

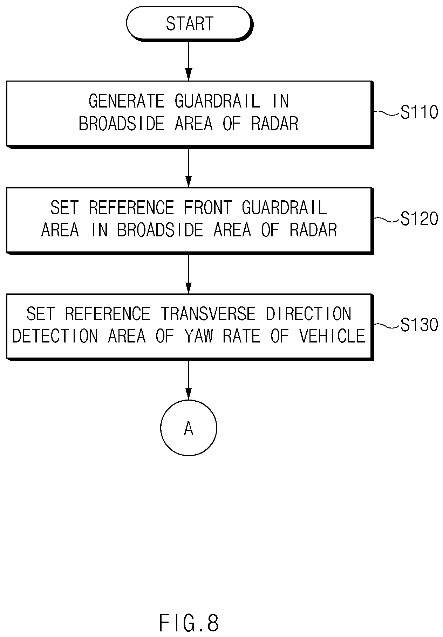

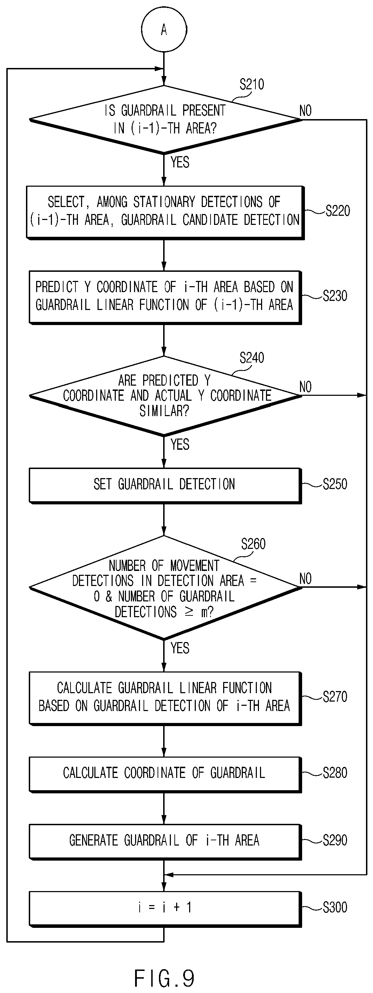

FIGS. 8 and 9 are views illustrating an operational flow of a guardrail detection method according to an embodiment of the present disclosure.

First, referring to FIG. 8, the guardrail detecting apparatus 100 according to an embodiment of the present disclosure generates a guardrail pattern in a side area formed in a direction that is perpendicular to the travel direction of the vehicle by using, among the detection signals acquired by processing the signals of the radar sensor 120, a stationary object detection around the central pillar (B-pillar) of the vehicle (S110).

Thereafter, the guardrail detecting apparatus 100 sets a guardrail detection area on the front side with respect to the guardrail pattern generated in the side area (S120), and sets a transverse direction detection area with respect to the yaw rate of the vehicle in the guardrail detection area (S130). Then, the guardrail detecting apparatus 100 may generate a guardrail pattern on the front side by using detection signals included in the transverse direction detection area in the guardrail detection area.

Here, the guardrail detection area is formed into N guardrail areas with respect to the travel direction of the vehicle, sequentially performs the processes in FIG. 9, starting from the first area that is closest to the vehicle, and generates a continuous guardrail pattern in the N guardrail detection areas.

Referring to FIG. 9, the guardrail detecting apparatus 100 identifies whether a guardrail pattern generated in the (i-1)-th area, in which the vehicle is located, in the N guardrail detection areas is present. When identifying that no guardrail pattern is present in the (i-1)-th area, the guardrail detecting apparatus 100 ends the operation of generating guardrail patterns for the i-th area and the subsequent areas.

When a guardrail pattern is present in the (i-1)-th area (S210), the guardrail detecting apparatus 100 selects, among the stationary object detections, a guardrail candidate detections detected in the i-th area on the front side (S220). In process 'S220', the guardrail detecting apparatus 100 may select, among the stationary object detections detected in the i-th area, stationary object detections included in the transverse direction detection area as guardrail candidate detections.

The guardrail detecting apparatus 100 predicts the "y" coordinates of guardrail candidate detections in the i-th area based on the linear guardrail function calculated to generate a guardrail pattern in the (i-1)-th area (S230). In process 'S230', the guardrail detecting apparatus 100 may predict the "y" coordinates by applying the "x" coordinates of the guardrail candidate detections in the i-th area to the linear guardrail function.

Then, the guardrail detecting apparatus 100 may compare the "y" coordinates predicted in process 'S230' and the actual "y" coordinates of the guardrail candidate detections to select the corresponding guardrail candidate detection as a valid guardrail detection (S250) when they are similar within a preset error range (S240).

The guardrail detecting apparatus 100 may determine whether a guardrail pattern is present in the i-th area by identifying the number of guardrail detections and the number of moving object detections selected in process 'S250'. In other words, when identifying that the number of the guardrail detections in the transverse direction detection area set in the i-th area is a specific number (m) or more and that there are 0 moving object detections (S260), the guardrail detecting apparatus 100 determines that a guardrail pattern is present in the i-th area, and thus performs a guardrail pattern generating operation of 'S270' to 'S290', and otherwise, ends the guardrail pattern generating operation.

When identifying that a guardrail is present in the i-th area, the guardrail detecting apparatus 100 calculates a linear guardrail function based on the guardrail detections selected in the i-th area (S270). In process 'S270', the guardrail detecting apparatus 100 may calculate a linear guardrail function by performing a linear regression based on the coordinate information of guardrail detections.

The guardrail detecting apparatus 100 calculates guardrail coordinates by using the linear guardrail function calculated in process 'S270' (S280), and generates a guardrail pattern based on the guardrail coordinates calculated in process 'S280' (S290).

Thereafter, the guardrail detecting apparatus 100 performs operations 'S210' to 'S290' while increasing i by 1 (S300) to generate a continuous guardrail pattern in the N guardrail detection areas.

Of course, when a guardrail pattern is not created in any one area while the guardrail detecting apparatus 100 performs a guardrail pattern generating operation in the order from the first area to the N-th area, the continuity of the guardrail is broken and the guardrail pattern is not generated in the subsequent areas and the operation ends.

As described above, according to an embodiment of the present disclosure, a recognition and tracking accuracy of a front guardrail may be improved by generating a front guardrail pattern based on, among signals detected by using radar, a valid detection signal, a front detection area may be set in advance and a guardrail detection signal in the set front detection area may be extracted whereby false warnings due to false targets may be minimized, and a front detection area may be divided to generate a guardrail pattern, not only straight but also curved guardrails may be recognized fluidly.

According to an embodiment of the present disclosure, a recognition and tracking accuracy of a front guardrail may be improved by generating a front guardrail pattern based on, among signals detected by using radar, a valid detection signal.

Furthermore, according to an embodiment of the present disclosure, a front detection area may be set in advance and a guardrail detection signal in the set front detection area may be extracted whereby false warnings due to false targets may be minimized.

In addition, according to an embodiment of the present disclosure, a front detection area may be divided to generate a guardrail pattern, not only straight but also curved guardrails may be recognized fluidly.

## Claims

1. A guardrail detecting apparatus comprising:
a radar sensor configured to radiate radar signals in different directions from a vehicle to detect a guardrail on a front side of the vehicle; and
a controller configured to select a guardrail detection satisfying a preset condition from detection information received from the radar sensor in a guardrail detection area set on the front side of the vehicle, and generate a guardrail pattern based on guardrail coordinate information calculated by using coordinate information of the guardrail detection;
wherein the controller includes an area setter configured to, when a prior guardrail pattern is present in a side area of the vehicle, set a plurality of the guardrail detection areas at a specific distance interval in a travel direction of the vehicle based on a location of the prior guardrail pattern in the side area, and set a transverse direction detection area including a specific distance range in leftward and rightward directions from a location of the prior guardrail pattern in the side area, in the plurality of the guardrail detection areas;**characterised in that**,
the area setter is further configured to:
adjust an interval of the plurality of the guardrail detection areas based on a velocity of the vehicle; and
adjust the specific distance range of the transverse direction detection area based on a yaw rate of the vehicle.

2. The guardrail detecting apparatus of claim 1, wherein in the plurality of the guardrail detection areas, first N areas are set on a left side of a center line in a longitudinal direction that is parallel to a travel direction of the vehicle, and second N areas corresponding to the first N areas are set on a right side of the center line.

3. The guardrail detecting apparatus of claim 1, wherein the controller includes:
a signal processor configured to generate detection information on at least one target;
a determiner configured to select a guardrail detection included in the transverse direction detection area in the detection information in the guardrail detection area set on the front side of the vehicle, and determine whether a guardrail is present in the plurality of the guardrail detection areas based on a number of the guardrail detections in the transverse direction detection area; and
a guardrail generator configured to, when it is identified that the guardrail is present in at least one of the plurality of the guardrail detection areas, calculate a coordinate of the guardrail based on coordinate information of the guardrail detection, and generate the guardrail pattern based on the coordinate of the guardrail.

4. The guardrail detecting apparatus of claim 3, wherein the determiner is further configured to:
when the prior guardrail pattern is present in the side area of the vehicle , select a stationary object detection included in the transverse direction detection area in the guardrail detection area on the front side of the vehicle as a guardrail candidate detection, compare an actual transverse direction location of the guardrail candidate detection and a predicted transverse direction location based on a linear guardrail function used when the prior guardrail pattern is present in the side area, and select a corresponding guardrail candidate detection as the guardrail detection when a difference between the actual transverse direction location and the predicted transverse direction location is within a preset error range.

5. The guardrail detecting apparatus of claim 4, wherein the determiner is further configured to determine that the guardrail is present in the corresponding guardrail detection area when a number of moving object detections in the guardrail detection area on the front side of the vehicle is 0 and the number of the guardrail detections is one or more.

6. The guardrail detecting apparatus of claim 5, wherein the guardrail generator is further configured to calculate a linear guardrail function based on the coordinate information of the guardrail detections in the guardrail detection area, and calculate a coordinate of the guardrail included in the guardrail detection area by substituting the coordinate information of the prior guardrail pattern present in the side area of the vehicle into the linear guardrail function.

7. The guardrail detecting apparatus of claim 3, wherein the guardrail generator is further configured to:
sequentially generate guardrail pattern in N guardrail detection areas on left side and right side from a first guardrail detection area on the front side of the vehicle, and end an operation of generating the guardrail pattern for subsequent guardrail detection areas when no guardrail pattern is generated in any one guardrail detection area among the N guardrail detection areas.

8. A guardrail detecting method comprising:
detecting, by a radar sensor, a guardrail on a front side of a vehicle, wherein the radar sensor is configured to radiate radar signals in different directions from the vehicle; and
selecting, by a controller, a guardrail detection satisfying a preset condition from detection information received from the radar sensor in a guardrail detection area set on a front side of the vehicle, and generating, by the controller, a guardrail pattern based on guardrail coordinate information calculated by using coordinate information of the guardrail detections
wherein the controller includes an area setter configured to, when a prior guardrail pattern is present in a side area of the vehicle, set a plurality of the guardrail detection areas at a specific distance interval in a travel direction of the vehicle based on a location of the prior guardrail pattern in the side area, and set a transverse direction detection area including a specific distance range in leftward and rightward directions from a location of the prior guardrail pattern in the side area, in the plurality of the guardrail detection areas; **characterised by**
adjusting, by the area setter, an interval of the plurality of the guardrail detection areas based on a velocity of the vehicle; and
adjusting, by the area setter, the specific distance range of the transverse direction detection area based on a yaw rate of the vehicle.

## Patentansprüche

1. Leitplankenerfassungsvorrichtung, aufweisend:
einen Radarsensor, der konfiguriert ist, Radarsignale in verschiedene Richtungen von einem Fahrzeug abzustrahlen, um eine Leitplanke auf einer Vorderseite des Fahrzeugs zu erfassen; und
eine Steuerung, die konfiguriert ist, eine Leitplankenerfassung, die eine voreingestellte Bedingung erfüllt, aus Erfassungsinformationen auszuwählen, die von dem Radarsensor in einem Leitplankenerfassungsbereich empfangen werden, der auf der Vorderseite des Fahrzeugs eingestellt ist, und ein Leitplankenmuster basierend auf Leitplankenkoordinateninformationen zu erzeugen, die durch Verwenden von Koordinateninformationen der Leitplankenerfassung berechnet werden;
wobei die Steuerung eine Bereichseinstelleinrichtung umfasst, die konfiguriert ist, wenn ein vorheriges Leitplankenmuster in einem Seitenbereich des Fahrzeugs vorhanden ist, mehrere der Leitplankenerfassungsbereiche in einem spezifischen Abstandsintervall in einer Fahrtrichtung des Fahrzeugs basierend auf einer Position des vorherigen Leitplankenmusters in dem Seitenbereich einzustellen, und einen Querrichtungserfassungsbereich einschließlich eines spezifischen Abstandsbereichs in Links- und Rechtsrichtungen von einer Position des vorherigen Leitplankenmusters in dem Seitenbereich in den mehreren der Leitplankenerfassungsbereiche einzustellen; **dadurch gekennzeichnet, dass**
die Bereichseinstelleinrichtung ferner konfiguriert ist zum:
Anpassen eines Intervalls der mehreren der Leitplankenerfassungsbereiche basierend auf einer Geschwindigkeit des Fahrzeugs; und
Anpassen des spezifischen Abstandsbereichs des Querrichtungserfassungsbereichs basierend auf einer Gierrate des Fahrzeugs.

2. Leitplankenerfassungsvorrichtung nach Anspruch 1, wobei in den mehreren der Leitplankenerfassungsbereiche erste N Bereiche auf einer linken Seite einer Mittellinie in einer Längsrichtung, die parallel zu einer Fahrtrichtung des Fahrzeugs ist, eingestellt sind, und zweite N Bereiche, die den ersten N Bereichen entsprechen, auf einer rechten Seite der Mittellinie eingestellt sind.

3. Leitplankenerfassungsvorrichtung nach Anspruch 1, wobei die Steuerung umfasst:
einen Signalprozessor, der konfiguriert ist, Erfassungsinformationen zu mindestens einem Ziel zu erzeugen;
eine Bestimmungseinrichtung, die konfiguriert ist, eine Leitplankenerfassung auszuwählen, die in dem Querrichtungserfassungsbereich in den Erfassungsinformationen in dem Leitplankenerfassungsbereich eingeschlossen ist, der auf der Vorderseite des Fahrzeugs eingestellt ist, und zu bestimmen, ob eine Leitplanke in den mehreren der Leitplankenerfassungsbereiche vorhanden ist, basierend auf einer Anzahl der Leitplankenerfassungen in dem Querrichtungserfassungsbereich; und
einen Leitplankengenerator, der konfiguriert ist, wenn erkannt wird, dass die Leitplanke in mindestens einem der mehreren der Leitplankenerfassungsbereiche vorhanden ist, eine Koordinate der Leitplanke basierend auf Koordinateninformationen der Leitplankenerfassung zu berechnen und das Leitplankenmuster basierend auf der Koordinate der Leitplanke zu erzeugen.

4. Leitplankenerfassungsvorrichtung nach Anspruch 3, wobei die Bestimmungseinrichtung ferner konfiguriert ist zum:
wenn das vorherige Leitplankenmuster in dem Seitenbereich des Fahrzeugs vorhanden ist, Auswählen einer Erfassung stationärer Objekte, die in dem Querrichtungserfassungsbereich in dem Leitplankenerfassungsbereich auf der Vorderseite des Fahrzeugs eingeschlossen ist, als Leitplankenkandidatenerfassung, Vergleichen einer tatsächlichen Querrichtungsposition der Leitplankenkandidatenerfassung und einer vorhergesagten Querrichtungsposition, basierend auf einer linearen Leitplankenfunktion, die verwendet wird, wenn das vorherige Leitplankenmuster in dem Seitenbereich vorhanden ist, und Auswählen einer entsprechenden Leitplankenkandidatenerfassung als die Leitplankenerfassung, wenn eine Differenz zwischen der tatsächlichen Querrichtungsposition und der vorhergesagten Querrichtungsposition innerhalb eines voreingestellten Fehlerbereichs liegt.

5. Leitplankenerfassungsvorrichtung nach Anspruch 4, wobei die Bestimmungseinrichtung ferner konfiguriert ist, zu bestimmen, dass die Leitplanke in dem entsprechenden Leitplankenerfassungsbereich vorhanden ist, wenn eine Anzahl von Erfassungen beweglicher Objekte in dem Leitplankenerfassungsbereich auf der Vorderseite des Fahrzeugs 0 ist und die Anzahl der Leitplankenerfassungen eins oder mehr ist.

6. Leitplankenerfassungsvorrichtung nach Anspruch 5, wobei der Leitplankengenerator ferner konfiguriert ist, eine lineare Leitplankenfunktion basierend auf den Koordinateninformationen der Leitplankenerfassungen in dem Leitplankenerfassungsbereich zu berechnen, und eine Koordinate der Leitplanke, die in dem Leitplankenerfassungsbereich eingeschlossen ist, durch Einsetzen der Koordinateninformationen des vorherigen Leitplankenmusters, das in dem Seitenbereich des Fahrzeugs vorhanden ist, in die lineare Leitplankenfunktion zu berechnen.

7. Leitplankenerfassungsvorrichtung nach Anspruch 3, wobei der Leitplankengenerator ferner konfiguriert ist zum:
sequenziellen Erzeugen eines Leitplankenmusters in N Leitplankenerfassungsbereichen auf der linken Seite und der rechten Seite von einem ersten Leitplankenerfassungsbereich auf der Vorderseite des Fahrzeugs und Beenden eines Vorgangs des Erzeugens des Leitplankenmusters für nachfolgende Leitplankenerfassungsbereiche, wenn in einem beliebigen Leitplankenerfassungsbereich unter den N Leitplankenerfassungsbereichen kein Leitplankenmuster erzeugt wird.

8. Leitplankenerfassungsverfahren, aufweisend:
Erfassen, durch einen Radarsensor, einer Leitplanke auf einer Vorderseite eines Fahrzeugs, wobei der Radarsensor konfiguriert ist, Radarsignale in verschiedene Richtungen von dem Fahrzeug abzustrahlen; und
Auswählen, durch eine Steuerung, einer Leitplankenerfassung, die eine voreingestellte Bedingung aus Erfassungsinformationen erfüllt, die von dem Radarsensor in einem Leitplankenerfassungsbereich empfangen werden, der auf einer Vorderseite des Fahrzeugs eingestellt ist, und Erzeugen, durch die Steuerung, eines Leitplankenmusters basierend auf Leitplankenkoordinateninformationen, die durch Verwenden von Koordinateninformationen der Leitplankenerfassung berechnet werden;
wobei die Steuerung eine Bereichseinstelleinrichtung umfasst, die konfiguriert ist, wenn ein vorheriges Leitplankenmuster in einem Seitenbereich des Fahrzeugs vorhanden ist, mehrere der Leitplankenerfassungsbereiche in einem spezifischen Abstandsintervall in einer Fahrtrichtung des Fahrzeugs basierend auf einer Position des vorherigen Leitplankenmusters in dem Seitenbereich einzustellen, und einen Querrichtungserfassungsbereich einschließlich eines spezifischen Abstandsbereichs in Links- und Rechtsrichtungen von einer Position des vorherigen Leitplankenmusters in dem Seitenbereich in den mehreren der Leitplankenerfassungsbereiche einzustellen; **gekennzeichnet durch**
Anpassen, durch die Bereichseinstelleinrichtung, eines Intervalls der mehreren der Leitplankenerfassungsbereiche basierend auf einer Geschwindigkeit des Fahrzeugs; und
Anpassen, durch die Bereichseinstelleinrichtung, des spezifischen Abstandsbereichs des Querrichtungserfassungsbereichs basierend auf einer Gierrate des Fahrzeugs.

## Revendications

1. Appareil de détection de glissière de sécurité comprenant :
un capteur radar configuré pour émettre des signaux radar dans différentes directions à partir d'un véhicule afin de détecter une glissière de sécurité sur un côté avant du véhicule ; et
un dispositif de commande configuré pour sélectionner une détection de glissière de sécurité satisfaisant une condition prédéfinie à partir d'informations de détection reçues en provenance du capteur radar dans une zone de détection de glissière de sécurité définie sur le côté avant du véhicule, et générer un modèle de glissière de sécurité sur la base d'informations de coordonnées de glissière de sécurité calculées en utilisant des informations de coordonnées de la détection de glissière de sécurité ;
dans lequel le dispositif de commande comporte un dispositif de définition de zone configuré pour, lorsqu'un modèle de glissière de sécurité précédent est présent dans une zone latérale du véhicule, définir une pluralité de zones de détection de glissière de sécurité à un intervalle de distance spécifique dans une direction de déplacement du véhicule sur la base d'un emplacement du modèle de glissière de sécurité précédent dans la zone latérale, et définir une zone de détection de direction transversale comportant une plage de distance spécifique dans des directions gauche et droite à partir d'un emplacement du modèle de glissière de sécurité précédent dans la zone latérale, dans la pluralité de zones de détection de glissière de sécurité ; **caractérisé en ce que**,
le dispositif de définition de zone est en outre configuré pour :
ajuster un intervalle de la pluralité des zones de détection de glissière de sécurité sur la base d'une vitesse du véhicule ; et
ajuster la plage de distance spécifique de la zone de détection de direction transversale sur la base d'une vitesse de lacet du véhicule.

2. Appareil de détection de glissière de sécurité selon la revendication 1, dans lequel, dans la pluralité de zones de détection de glissière de sécurité, des premières N zones sont définies sur un côté gauche d'une ligne centrale dans une direction longitudinale qui est parallèle à une direction de déplacement du véhicule, et des secondes N zones correspondant aux premières N zones sont définies sur un côté droit de la ligne centrale.

3. Appareil de détection de glissière de sécurité selon la revendication 1, dans lequel le dispositif de commande comporte :
un processeur de signal configuré pour générer des informations de détection sur au moins une cible ;
un dispositif de détermination configuré pour sélectionner une détection de glissière de sécurité incluse dans la zone de détection de direction transversale dans les informations de détection dans la zone de détection de glissière de sécurité définie sur le côté avant du véhicule, et déterminer si une glissière de sécurité est présente dans la pluralité des zones de détection de glissière de sécurité sur la base d'un nombre de détections de glissière de sécurité dans la zone de détection de direction transversale ; et
un générateur de glissière de sécurité configuré pour, lorsqu'il est identifié que la glissière de sécurité est présente dans au moins l'une parmi la pluralité des zones de détection de glissière de sécurité, calculer une coordonnée de la glissière de sécurité sur la base d'informations de coordonnées de la détection de glissière de sécurité, et générer le modèle de glissière de sécurité sur la base de la coordonnée de la glissière de sécurité.

4. Appareil de détection de glissière de sécurité selon la revendication 3, dans lequel le dispositif de détermination est en outre configuré pour :
lorsque le modèle de glissière de sécurité précédent est présent dans la zone latérale du véhicule, sélectionner une détection d'objet stationnaire incluse dans la zone de détection de direction transversale dans la zone de détection de glissière de sécurité sur le côté avant du véhicule en tant que détection de glissière de sécurité candidate, comparer un emplacement de direction transversale réel de la détection de glissière de sécurité candidate et un emplacement de direction transversale prédit sur la base d'une fonction de glissière de sécurité linéaire utilisée lorsque le modèle de glissière de sécurité précédent est présent dans la zone latérale, et sélectionner une détection de glissière de sécurité candidate correspondante en tant que détection de glissière de sécurité lorsqu'une différence entre l'emplacement de direction transversale réel et l'emplacement de direction transversale prédit se situe dans une plage d'erreur prédéfinie.

5. Appareil de détection de glissière de sécurité selon la revendication 4, dans lequel le dispositif de détermination est en outre configuré pour déterminer que la glissière de sécurité est présente dans la zone de détection de glissière de sécurité correspondante lorsqu'un nombre de détections d'objets mobiles dans la zone de détection de glissière de sécurité sur le côté avant du véhicule est égal à 0 et que le nombre de détections de glissière de sécurité est égal à un ou plus.

6. Appareil de détection de glissière de sécurité selon la revendication 5, dans lequel le générateur de glissière de sécurité est en outre configuré pour calculer une fonction de glissière de sécurité linéaire sur la base des informations de coordonnées des détections de glissière de sécurité dans la zone de détection de glissière de sécurité, et calculer une coordonnée de la glissière de sécurité incluse dans la zone de détection de glissière de sécurité en substituant les informations de coordonnées du modèle de glissière de sécurité précédent présent dans la zone latérale du véhicule dans la fonction de glissière de sécurité linéaire.

7. Appareil de détection de glissière de sécurité selon la revendication 3, dans lequel le générateur de glissière de sécurité est en outre configuré pour :
générer de manière séquentielle un modèle de glissière de sécurité dans N zones de détection de glissière de sécurité sur un côté gauche et un côté droit à partir d'une première zone de détection de glissière de sécurité sur le côté avant du véhicule, et terminer une opération de génération du modèle de glissière de sécurité pour des zones de détection de glissière de sécurité suivantes lorsqu'aucun modèle de glissière de sécurité n'est généré dans l'une quelconque zone de détection de glissière de sécurité parmi les N zones de détection de glissière de sécurité.

8. Procédé permettant de détecter une glissière de sécurité comprenant :
la détection, par un capteur radar, d'une glissière de sécurité sur un côté avant d'un véhicule, dans lequel le capteur radar est configuré pour émettre des signaux radar dans différentes directions à partir du véhicule ; et
la sélection, par un dispositif de commande, d'une détection de glissière de sécurité satisfaisant une condition prédéfinie à partir d'informations de détection reçues en provenance du capteur radar dans une zone de détection de glissière de sécurité définie sur un côté avant du véhicule, et la génération, par le dispositif de commande, d'un modèle de glissière de sécurité sur la base d'informations de coordonnées de glissière de sécurité calculées en utilisant des informations de coordonnées de la détection de glissière de sécurité
dans lequel le dispositif de commande comporte un dispositif de définition de zone configuré pour, lorsqu'un modèle de glissière de sécurité précédent est présent dans une zone latérale du véhicule, définir une pluralité de zones de détection de glissière de sécurité à un intervalle de distance spécifique dans une direction de déplacement du véhicule sur la base d'un emplacement du modèle de glissière de sécurité précédent dans la zone latérale, et définir une zone de détection de direction transversale comportant une plage de distance spécifique dans des directions gauche et droite à partir d'un emplacement du modèle de glissière de sécurité précédent dans la zone latérale, dans la pluralité de zones de détection de glissière de sécurité ; **caractérisé par**
l'ajustement, par le dispositif de définition de zone, d'un intervalle de la pluralité de zones de détection de glissière de sécurité sur la base d'une vitesse du véhicule ; et
l'ajustement, par le dispositif de définition de zone, de la plage de distance spécifique de la zone de détection de direction transversale sur la base d'une vitesse de lacet du véhicule.
